# EUROPÄISCHE PATENTSCHRIFT

(11) **EP 4 140 559 B1**
(45) Veröffentlichungstag und Bekanntmachung des Hinweises auf die Patenterteilung: **09.10.2024**
(21) Anmeldenummer: 22188344.0
(22) Anmeldetag: 02.08.2022
(51) Int. Cl.: B01D 33/15, B01D 33/42, D06F 39/08, D06F 33/43, D06F 39/10, B01D 35/12, B01D 33/52, B01D 29/05, B01D 29/58, B01D 29/70

(54) **FILTERVORRICHTUNG FÜR EIN WASSERFÜHRENDES HAUSHALTSGERÄT, WASSERFÜHRENDES HAUSHALTSGERÄT UND VERFAHREN ZUM REINIGEN DER FILTERVORRICHTUNG**
FILTER DEVICE FOR A WATER-CONDUCTING DOMESTIC APPLIANCE, WATER-CONDUCTING DOMESTIC APPLIANCE AND METHOD FOR CLEANING THE FILTER DEVICE
DISPOSITIF FILTRE POUR UN APPAREIL ÉLECTROMÉNAGER À CIRCULATION D'EAU, APPAREIL ÉLECTROMÉNAGER À CIRCULATION D'EAU ET PROCÉDÉ DE NETTOYAGE DU DISPOSITIF FILTRE

(30) Priorität: 31.08.2021 DE 102021209568
(43) Veröffentlichungstag der Anmeldung: 01.03.2023
(73) Patentinhaber: E.G.O. Elektro-Gerätebau GmbH, 75038 Oberderdingen (DE)
(72) Erfinder: Di Maggio, Antonio, 74193 Schwaigern (DE); Schaumann, Uwe, 75038 Oberderdingen (DE); Hardacker, Ingo, 46499 Hamminkeln (DE); Kessler, Arnd, 40789 Monheim/Rhein (DE)
(74) Vertreter: Patentanwälte Ruff, Wilhelm, Beier, Dauster & Partner mbB

(56) Entgegenhaltungen:
- WO-A1-2015/028271
- WO-A2-2020/046241
- CN-A- 108 721 987
- DE-B3- 102011 087 202

## Beschreibung

### ANWENDUNGSGEBIET UND STAND DER TECHNIK

Die Erfindung betrifft eine Filtervorrichtung für ein wasserführendes Haushaltsgerät, ein solches wasserführendes Haushaltsgerät, insbesondere eine Waschmaschine, sowie ein Verfahren zum Reinigen einer solchen Filtervorrichtung.

Eine Filtervorrichtung für ein wasserführendes Haushaltsgerät in Form einer Geschirrspülmaschine ist aus der DE 10 2019 205 919 A1 bekannt. Dort ist die Filtervorrichtung an der Unterseite eines Sumpfes der Geschirrspülmaschine angeordnet.

Eine weitere Filtervorrichtung für eine Waschmaschine ist aus der DE 10 2019 203 809 B3 bekannt. Diese Filtervorrichtung kann gut rückgespült werden zur Reinigung.

Aus der DE 10 2011 087 202 B3 sind ein Filter und ein damit versehenes wasserführendes Haushaltsgerät bekannt, bei denen in einem Filtergehäuse, das von verunreinigtem Wasser durchströmt wird, eine Filterfläche angeordnet ist. Diese Filterfläche kann so in dem Filtergehäuse angeordnet sein, dass sie um eine Drehachse gedreht werden kann. Je nach Drehung kann die Filterfläche von der einen Richtung oder von der anderen, entgegengesetzten Richtung her durchströmt werden. Dies dient dazu, ein Rückspülen des Filters zu seiner Reinigung zu ermöglichen.

Aus der CN 108 721 987 B ist eine weitere Filtereinrichtung bekannt mit einem Filtergehäuse, das längs von Wasser durchströmt wird. In dem Filtergehäuse ist entlang einer Längsmittelachse eine drehbare Welle angeordnet, auf der zwei Filterscheiben angeordnet sind. Diese beiden Filterscheiben sind zusammen mit der Welle drehbar.

Aus der WO 2020/046 241 A2 ist eine Waschmaschine bekannt mit einem Filter, der zwei konzentrische, rohrartig ausgebildete Filterelemente besteht. Diese beiden Filterelemente können einen unterschiedlichen Filtergrad aufweisen.

### AUFGABE UND LÖSUNG

Der Erfindung liegt die Aufgabe zugrunde, eine Filtervorrichtung für ein wasserführendes Haushaltsgerät, ein solches wasserführendes Haushaltsgerät sowie ein Verfahren zum Reinigen einer solchen Filtervorrichtung zu schaffen, mit denen Probleme des Standes der Technik gelöst werden können und es insbesondere möglich ist, die Filtervorrichtung im Betrieb des Haushaltsgeräts effizient nutzen zu können und sie auch gut reinigen zu können.

Gelöst wird diese Aufgabe durch eine Filtervorrichtung mit den Merkmalen des Anspruchs 1, durch ein wasserführendes Haushaltsgerät mit den Merkmalen des Anspruchs 14 sowie durch ein Verfahren zum Reinigen einer solchen Filtervorrichtung mit den Merkmalen des Anspruchs 16. Vorteilhafte sowie bevorzugte Ausgestaltungen der Erfindung sind Gegenstand der weiteren Ansprüche und werden im Folgenden näher erläutert. Dabei werden manche der Merkmale nur für die Filtervorrichtung, nur für das Haushaltsgerät oder nur für das Verfahren beschrieben. Sie sollen jedoch unabhängig davon sowohl für die Filtervorrichtung als auch für das Haushaltsgerät und für das Verfahren zu ihrer Reinigung selbständig und unabhängig voneinander gelten können. Der Wortlaut der Ansprüche wird durch ausdrückliche Bezugnahme zum Inhalt der Beschreibung gemacht.

Es ist vorgesehen, dass die Filtervorrichtung ein durchströmtes Filtergehäuse mit Schmutzwassereingang, Filterwasserausgang und Filtratausgang aufweist. Sie weist mindestens einen Flächenfilter und eine Halterung für den Flächenfilter in dem Filtergehäuse auf, wobei der Flächenfilter eine bestimmte bzw. vorgegebene Maschenweite und einen bestimmten bzw. vorgegebenen Winkel zur Horizontalen aufweist. Außerdem weist sie eine Filtratkammer in dem Filtergehäuse zum Sammeln von Filtrat auf, das von dem Flächenfilter zurückgehalten worden ist.

Der Flächenfilter, der Schmutzwassereingang und der Filterwasserausgang sind derart zueinander angeordnet, dass eine Durchflussrichtung für Wasser vom Schmutzwassereingang bis zum Filterwasserausgang durch den Flächenfilter verläuft, bevorzugt zwingend durch den Flächenfilter verläuft. So kann eine Filterung des Wassers sichergestellt werden. Die Filtratkammer ist mittels des Filtratausgangs zugänglich, um das Filtrat aus der Filtratkammer zu entfernen.

Erfindungsgemäß ist der mindestens eine Flächenfilter formveränderlich zur Veränderung seiner Maschenweite. So wird jeweils ein Filtergrad bzw. können die Filtereigenschaften der Filtervorrichtung verändert ohne Austausch eines der Flächenfilter. Es muss auch keine Umleitung von Wasserströmen vorgesehen werden. Das Verändern des Filtergrads bzw. der Filtereigenschaften kann unterschiedlich genutzt werden, vorteilhaft für ein verbessertes Rückspülen des mindestens einen Flächenfilters.

In Ausgestaltung der Erfindung kann der Filtratausgang direkt zu der Filtratkammer gehen bzw. direkt von der Filtratkammer abgehen. Vorzugsweise kann Filtratausgang mittels eines Kammerverschlusses am Filtergehäuse verschließbar und öffenbar sein, wofür sich insbesondere ein Ventil als Kammerverschluss eignet. Sind zwei Flächenfilter in der Filtervorrichtung vorgesehen, insbesondere ein Grob-Filter und ein Fein-Filter, so kann für jeden eine eigene Filtratkammer und ein eigener Filtratausgang vorgesehen sein. Die beiden Filtratausgänge können dann unter Umständen zusammengeführt sein für eine gemeinsame Entsorgung des Filtrats, alternativ können sie separat sein für eine jeweilige separate Entsorgung.

In vorteilhafter Ausgestaltung der Erfindung weist mindestens ein Flächenfilter eine im wesentlichen ebene Form auf, wobei vorzugsweise alle Flächenfilter eine im wesentlichen ebene Form aufweisen. Insbesondere kann der mindestens eine Flächenfilter plan ausgebildet sein. In dieser Hinsicht kann seine Form auch veränderbar ausgebildet sein, wobei sie vorzugsweise jeweils im wesentlichen ebene Form behalten sollte, dabei aber beispielsweise etwas verdreht oder etwas gewellt sein kann.

In besonders vorteilhafter Ausgestaltung der Erfindung kann die Filtervorrichtung mindestens zwei Flächenfilter aufweisen, insbesondere können diese Flächenfilter jeweils unterschiedlichen Filtergrad für die Filterung aufweisen. Bevorzugt sind die mindestens zwei Flächenfilter in der Durchflussrichtung des Wassers durch die Filtervorrichtung hintereinander in dem Filtergehäuse angeordnet. Dies wird nachfolgend noch näher erläutert. Es kann vorgesehen sein, dass diese mindestens zwei Flächenfilter übereinander angeordnet sind, und Wasser nach dem Filtern zuerst durch einen oberen Flächenfilters hindurch tritt und dann zu dem unteren Flächenfilters gelangt. Die mindestens zwei Flächenfilter können in ggf. zueinander parallelen Ebenen angeordnet sein, dies muss aber nicht so sein. Es ist möglich, dass ein erster Flächenfilter oberhalb eines zweiten Flächenfilters angeordnet ist. Der Schmutzwassereingang kann vorteilhaft in der Durchflussrichtung vor bzw. über dem oberen ersten Flächenfilter angeordnet sein. Ein Filterwasserausgang ist dann vorteilhaft in der Durchflussrichtung hinter bzw. unter dem unteren zweiten Flächenfilter angeordnet, sodass Wasser von beiden Flächenfiltern nacheinander bzw. eben zweimal gefiltert wird.

Dabei ist vorteilhaft vorgesehen, dass ein Grob-Flächenfilter für einen Grob-Filtergrad und ein Fein-Flächenfilter für einen Fein-Filtergrad ausgebildet ist. Ein oberer erster Flächenfilter bildet bevorzugt einen Grob-Filter, insbesondere für Grobteile mit mehr als 2 mm Durchmesser. Ein unterer zweiter Flächenfilter bildet bevorzugt einen Fein-Filter, insbesondere für Verunreinigungen oder Partikel größer als 1 µm oder größer als 50 µm Durchmesser. Hier können beispielsweise auch Mikrofasern herausgefiltert werden.

In weiterer Ausgestaltung der Erfindung kann der mindestens eine Flächenfilter allgemein schräg gestellt sein mit einem Winkel zwischen 0° und 30° zur Horizontalen, sodass auf ihn gelangendes Wasser, das gefiltert werden soll, sich gut über seine Fläche verteilt. Dabei kann ein nach unten weisender bzw. nach unten geneigter Außenrand des Flächenfilters hin zu der Filtratkammer weisen, insbesondere in vertikaler Linie direkt über der Filtratkammer liegen. Dann ist es möglich, dass sich Filtrat nicht oberhalb des Flächenfilters ansammelt, sondern in einer weitgehend separaten Kammer oder in einem separaten Bereich. Ansonsten kann Filtrat aber auch oberhalb des Flächenfilters oder auf dem Flächenfilters gesammelt werden, sodass dieser Bereich die Filtratkammer bildet.

Ein erster Flächenfilter, insbesondere ein Grob-Filter mit einem Grob-Filtergrad, kann in möglicher Ausgestaltung in Durchflussrichtung hinter dem bzw. unterhalb von dem Schmutzwassereingang angeordnet sein und schräg gestellt sein mit einem Winkel zwischen 0° und 30° zur Horizontalen. Die Durchflussrichtung geht dann durch den ersten Flächenfilter hindurch direkt zum Filterwasserausgang, wobei ein unterer Außenrand des ersten Flächenfilters über einer separaten Filtratkammer endet. An dieser Filtratkammer ist ein zweiter Flächenfilter angeordnet, insbesondere ein Fein-Filter mit einem Fein-Filtergrad. Er ist derart zwischen der Filtratkammer und dem Filterwasserausgang angeordnet, dass durch den zweiten Flächenfilter hindurchtretendes gefiltertes Wasser mit dessen zweitem Filtergrad gefiltert ist. Er kann insbesondere vertikal ausgerichtet bzw. angeordnet sein.

Für die Flächenfilter kann eine Rechteckform vorgesehen sein. Diese ermöglicht besonders gut eine Beeinflussung der Form des Flächenfilters zur Beeinflussung des Filtergrads, wie nachfolgend noch näher erläutert wird.

Vorteilhaft ist eine Aktoreinrichtung an dem Flächenfilter angeordnet, die zu dessen Formveränderung und somit zur Beeinflussung dessen Filtergrades ausgebildet ist. Besonders vorteilhaft ist die Aktoreinrichtung dazu ausgebildet, den Flächenfilter einfach oder mehrfach zu verbiegen, zu verdrehen, oder auch entweder zu stauchen oder zu strecken, also in Länge und/oder Breite zu verändern. Der Flächenfilter weist bevorzugt Poren bzw. Filtermaschen auf, die sich durch die Formveränderung derart verändern können und deren Maschenweite sich derart verändern kann, dass bei einem Rückspülen des Flächenfilters entgegen der Durchflussrichtung des Wassers daran festgesetzte Verunreinigungen lösbar sind. So können diese Verunreinigungen bzw. Grobteile und/oder Feinteile aus dem Filter entfernt werden.

In Ausgestaltung der Erfindung kann die Aktoreinrichtung bimetallisch, als Formgedächtnis-Legierung, formveränderlich durch Ändern eines pH-Werts ihrer Umgebung, elektromotorisch, elektromagnetisch oder elektrothermisch arbeitend ausgebildet sein. Damit gibt es eine Vielzahl von unterschiedlichen Möglichkeiten, die Aktoreinrichtung zu beeinflussen bzw. eine Formveränderung des Flächenfilters zu bewirken oder rückgängig zu machen. Eine Möglichkeit ist also ein direktes Ansteuern über Veränderung eines Stromflusses. Eine andere Möglichkeit ist sozusagen ein indirektes Ansteuern über Wasser, das durch die Filtereinrichtung fließt und somit vor allem thermisch, möglicherweise auch über den PH-Wert der Umgebung, mittels der Aktoreinrichtung auf die Form und somit den Filtergrad des Flächenfilters einzuwirken.

In möglicher weiterer Ausgestaltung der Erfindung kann der Flächenfilter eine auxetische Struktur aufweisen. Dabei können die vorgenannten Poren bzw. Filtermaschen durch die auxetische Struktur in ihrer Größe bzw. Maschenweite und somit auch der Filtergrad veränderbar sein.

Vorteilhaft können ein Teil eines Rahmens des Flächenfilters oder eine Halterung für den Flächenfilter aus einer Formgedächtnis-Legierung bestehen oder eine Aktoreinrichtung aufweisen, die aus einer Formgedächtnis-Legierung besteht. Eine Formänderung der Formgedächtnis-Legierung ist vorteilhaft temperaturabhängig, wobei eine Auslöse-Temperatur für die Formänderung zwischen 20°C und 80°C liegen kann, insbesondere zwischen 40°C und 60 °C. Ein solcher Temperaturbereich kann bei einem normalen Waschvorgang gut erreicht werden.

In Ausgestaltung der Erfindung kann dem mindestens einen Flächenfilter oder einer der vorgenannten Aktoreinrichtungen eine Heizung zugeordnet sein. Eine solche Heizung kann relativ nahe, insbesondere mit Abstand von weniger als 2 cm, zu dem Flächenfilter oder der Aktoreinrichtung im Filtergehäuse angeordnet sein. Alternativ kann die Heizung Bestandteil einer Filterfläche des Flächenfilters selbst sein, sodass beispielsweise Drähte oder Fäden, die den Filter bzw. dessen Filtermaschen bilden, zumindest teilweise elektrisch leitfähig sein können.

Bei der Erfindung ist es möglich, das Filtergehäuse oder den mindestens einen Flächenfilter drehbar auszubilden, vorzugsweise um 180° um eine horizontale Drehachse drehbar auszubilden. Für die Drehbarkeit kann ein Drehantrieb vorgesehen sein, der außerhalb des Filtergehäuses angeordnet ist. Dabei kann der Drehantrieb so ausgebildet sein, dass er elektromotorisch, beispielsweise als Schrittmotor, elektromagnetisch oder elektrothermisch arbeitet.

Ein gesamtes erfindungsgemäßes wasserführendes Haushaltsgerät weist eine vorbeschriebene Filtervorrichtung auf sowie eine Behandlungskammer für zu reinigende Gegenstände, Wasserleitungen hin zu der Behandlungskammer und weg von der Behandlungskammer, Ventile an bzw. in den Wasserleitungen und einen Frischwasseranschluss von außen an das Haushaltsgerät heran sowie einen Auslaufanschluss aus dem Haushaltsgerät heraus. Des Weiteren weist es eine Pumpe und eine Heizeinrichtung auf, die mit den Wasserleitungen zusammengeschaltet und mit der Behandlungskammer verbunden sind sowie mit der Filtervorrichtung verbunden sind. Schließlich weist es eine Gerätesteuerung, vorteilhaft eine einzige Gerätesteuerung, die auch für die Filtervorrichtung zuständig ist. Dabei kann die Filtervorrichtung in Durchflussrichtung von Wasser zwischen der Behandlungskammer und der Pumpe angeordnet sein. Bevorzugt sind zwischen Behandlungskammer und Filtervorrichtung außer Filtern bzw. Sieben und Ventilen keine Funktionseinheiten angeordnet. So kann ein Aufbau vereinfachten Praxistauglichkeit in werden.

Neben einem Filter-Betrieb gibt es bei einem erfindungsgemäßen Verfahren zum Reinigen einer vorgenannten Filtervorrichtung noch einen Rückspül-Betrieb für die Filtervorrichtung. Bei dem Filter-Betrieb tritt zu filterndes Wasser zum Schmutzwassereingang in die Filtervorrichtung ein bzw. wird hineingepumpt, wobei gefiltertes Wasser zum Filterwasserausgang austritt und mittels der Pumpe im Haushaltsgerät weitergepumpt wird. Beim Rückspül-Betrieb der Filtervorrichtung bzw. mindestens eines der Flächenfilter der Filtervorrichtung wird die Form des Flächenfilters in dem Filtergehäuse verändert. Wie zuvor beschrieben kann damit der Filtergrad verändert werden, so dass beim Rückspülen ein höherer Filtergrad eingestellt werden kann. Dies kann dazu verwendet werden, dass im Flächenfilter festgehaltene Teilchen leichter gelöst bzw. entfernt werden können, damit sie dann leicht beim Rückspülen entfernt werden können sowohl von dem Flächenfilter weg als auch aus der gesamten Filtervorrichtung heraus.

In vorteilhafter Ausgestaltung der Erfindung können die Form und/oder die Anordnung des Flächenfilters in dem Filtergehäuse thermisch verändert werden, hierfür bietet sich beispielsweise ein Beheizen an, vorzugsweise des Flächenfilters selbst oder einer Aktoreinrichtung für den Flächenfilter. Dies kann durch eine Temperaturänderung des Wassers erreicht werden, das in die Filtervorrichtung bzw. an den Flächenfilter kommt, sei es beim Filtern oder beim Rückspülen. Alternativ kann hierfür eine speziell ansteuerbare elektrische Heizvorrichtung vorgesehen sein. Zusätzlich oder alternativ zu einem Beheizen kann ein mechanisches Verändern durch Verformen des Flächenfilters erfolgen. Dafür geeignete Möglichkeiten, insbesondere auch Aktoren, sind vorstehend ja beschrieben worden.

In vorteilhafter Ausgestaltung der Erfindung kann die Pumpe beim Rückspül-Betrieb des mindestens einen Flächenfilters Wasser durch Wasserleitungen und Ventile durch den Filterwasserausgang oder durch einen separaten Rückspüleingang am Filtergehäuse in das Filtergehäuse hinein pumpen, und dann entgegen der allgemeinen Durchflussrichtung des Wassers durch den mindestens einen Flächenfilter pumpen. Besonders vorteilhaft erfolgt dieses Pumpen durch alle Flächenfilter hindurch. Dabei können Verunreinigungen entweder in der Filtratkammer gesammelt werden oder zum Filtratausgang aus dem Filtergehäuse herausgespült werden.

Bevorzugt ist es möglich, dass die Pumpe beim Rückspül-Betrieb mit maximaler kurzfristig möglicher Leistung arbeitet, vorzugsweise in einem Intervallbetrieb mit Variation zwischen maximaler Leistung und Stopp des Pumpbetriebs. So kann ein Rückspülen quasi mit einem erhöhten Wasserdruck und sozusagen schlagartig erfolgen, was dessen Wirksamkeit stark erhöhen kann, insbesondere beim Lösen von in dem Flächenfilters festgehaltenen Teilen bzw. Partikeln. Vorteilhaft kann eine maximale kurzfristig mögliche Leistung der Pumpe mindestens 30% über einer maximalen Dauer-Leistung liegen, möglicherweise zwischen 50% und 100%.

In vorteilhafter Ausgestaltung der Erfindung erfolgt beim Rückspül-Betrieb die Veränderung der Form und/oder der Anordnung des Flächenfilters in dem Filtergehäuse erst, nachdem Wasser von der Pumpe entgegen der Durchflussrichtung durch den mindestens einen Flächenfilter gepumpt worden ist oder nachdem Frischwasser von außen mit Druck durch den mindestens einen Flächenfilters geleitet worden ist. Das Rückspülen hat also schon begonnen. Eine Zeitverzögerung kann mindestens 2 Sekunden danach betragen, vorteilhaft bis zu 5 Sekunden oder bis zu 10 Sekunden danach betragen.

In Weiterbildung der Erfindung kann beim Filter-Betrieb mit dem zuvor beschriebenen Fein-Filtergrad mehr als 50% des Wassers, das durch die Filtervorrichtung geleitet bzw. gepumpt wird, in der Durchflussrichtung durch den Grob-Flächenfilter mit dem Grob-Filtergrad gepumpt werden. Dabei kann ein Anteil von weniger als 50%, insbesondere weniger als 20%, zusätzlich oder alternativ zum Grob-Flächenfilter durch den Fein-Flächenfilter gepumpt werden. Die FeinFilterung von Wasser kann während des Durchführens eines Waschprogramms durchgeführt werden. Beim Filter-Betrieb kann Wasser, das insgesamt mit dem Fein-Flächenfilter zu filtern ist, mehrfach durch die Filtervorrichtung gepumpt werden, insbesondere mindestens fünfmal oder mindestens zehnmal. Dabei kann es jeweils zu einem Anteil von weniger als 50%, insbesondere weniger als 20%, durch den Fein-Flächenfilter gepumpt wird. Bevorzugt wird aber das gesamte in dem Haushaltsgerät umlaufende Wasser sowohl grob als auch fein gefiltert, besonders bevorzugt auch mehrfach.

Diese und weitere Merkmale gehen außer aus den Ansprüchen auch aus der Beschreibung und den Zeichnungen hervor, wobei die einzelnen Merkmale jeweils für sich alleine oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind. Dabei zeigen:
- Fig. 1: ein stark schematisierter Seitenschnitt durch eine erfindungsgemäße Waschmaschine mit einem erfindungsgemäßen Filter,
- Fig. 2: ein schematisierter Seitenschnitt durch einen erfindungsgemäßen Filter,
- Fig. 3: eine vereinfachte und abgewandelte Darstellung des Filters ähnlich Fig. 2 mit einem Grob-Filter und einem Fein-Filter darin,
- Fig. 4: ein Längsschnitt durch einen Filter ähnlich Fig. 2 mit Aufbau des Filtergehäuses,
- Fig. 5: ein perspektivischer Schnitt ähnlich Fig. 4 durch eine nochmals abgewandelte Variante des Filters mit Grob-Filter und Fein-Filter,
- Fig. 6: eine gerade Draufsicht auf den Längsschnitt von Fig. 5,
- Fig. 7: eine vereinfachte Schnittdarstellung ähnlich Fig. 2 mit Veranschaulichung von Wasserfluss und Filtratfluss,
- Fig. 8: ein Schnitt ähnlich Fig. 6 durch den Filter aus Fig. 7,
- Fig. 9: eine Abwandlung des Filters aus Fig. 7 mit leicht verdrehtem oberen Grob-Filter,
- Fig. 10: eine weitere Abwandlung ähnlich Fig. 9 mit gestauchtem oberen Grob-Filter,
- Fig. 11: eine weitere Abwandlung des Filters aus Fig. 9 mit deutlich verdrehtem oberen GrobFilter,
- Fig. 12: eine Draufsicht auf den Grob-Filter in flächiger Ausdehnung mit einem umlaufenden Grob-Filterrahmen und daran angreifenden Grob-Filteraktoren in Form von Bimetallstreifen,
- Fig. 13: eine Seitenansicht einer weiteren Möglichkeit zur Lageänderung des Grob-Filters durch Verschwenken um einen mittleren Drehpunkt und
- Fig. 14: eine nochmals weitere Abwandlung ähnlich Fig. 13 mit Verschwenken des Grob-Filters um einen am Ende gelegenen Drehpunkt.

### DETAILLIERTE BESCHREIBUNG DER AUSFÜHRUNGSBEISPIELE

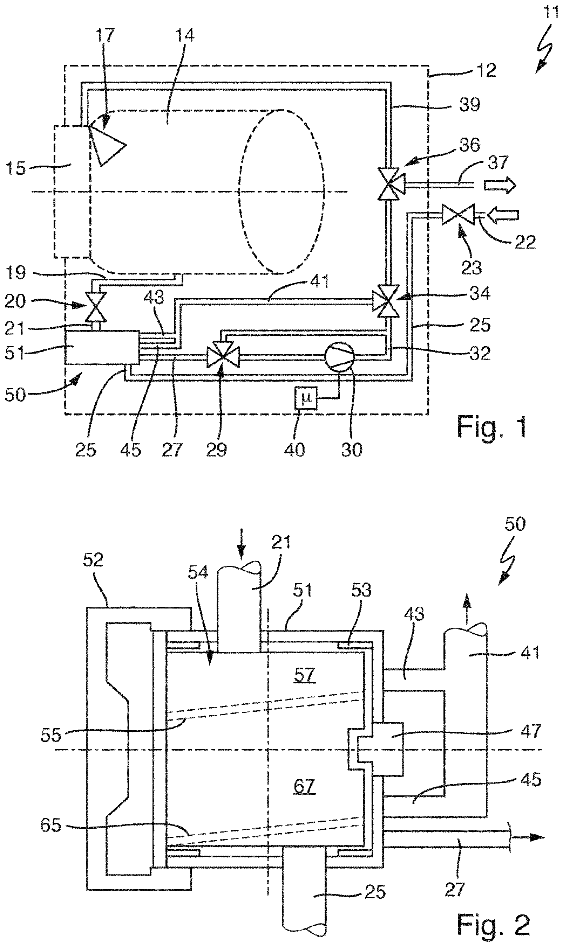

In der Fig. 1 ist eine Waschmaschine 11 als wasserführendes Haushaltsgerät gemäß der Erfindung dargestellt mit einem Gehäuse 12. In der Waschmaschine 11 ist wie üblich eine Trommel 14 mit einer Tür 15 als Zugang dazu vorgesehen. Oben und vorne an der Trommel 14 ist eine Einspritzvorrichtung 17 vorgesehen, um auf bekannte Art und Weise Wasser auf in der Trommel 14 befindliche Wäsche zu bringen.

Unten aus der Trommel 14 führt eine Ablaufleitung 19 heraus mit einem Ablaufventil 20, um diesen Ablauf steuern zu können. An das Ablaufventil 20 ist ein Schmutzwassereingang 21 eines erfindungsgemäßen Filters 50 als erfindungsgemäße Filtervorrichtung angeschlossen. Dieser weist ein Filtergehäuse 51 und zahlreiche weitere funktionale Details auf, die nachfolgend in den Fig. 2 bis 14 im Detail dargestellt werden.

Rechts führt ein Zulauf 22 in die Waschmaschine 11 mit einem Zulaufventil 23. Daran angeschlossen ist eine Zulaufleitung 25, die an den Filter 51 geht. Aus dem Filter 51 führt nach rechts zum einen ein Filterwasserausgang 27 heraus, der an ein Pumpenventil 29 geht, das als Drei-Wege-Ventil ausgebildet ist. Ein erster Weg geht an eine Pumpe 30, die vorteilhaft als beheizbare Pumpe mit integriertem Heizelement ausgebildet ist. Von der Pumpe 30 bzw. von einem Pumpenausgang 32 geht eine Leitung zu einem Ausgangsventil 34, das auch als Drei-Wege-Ventil ausgebildet ist. Eine obere Leitung geht von dem Pumpenventil 29 ebenfalls an den Eingang des Ausgangsventils 34, um sozusagen einen Bypass über die Pumpe 30 hinweg zu bilden.

Von dem Ausgangsventil 34 geht eine Leitung nach oben zu einem Auslaufventil 36, das auch als Drei-Wege-Ventil ausgebildet ist. Ein Weg nach rechts führt zu einem Auslauf 37 aus der Waschmaschine 11 heraus. Eine Steigleitung 39 geht nach oben und hin zu der vorgenannten Einspritzvorrichtung 17.

Von dem Filter 50 gehen noch ein Grob-Filtratausgang 43 und ein Fein-Filtratausgang 45 ab zu einer Filtratleitung 41, welche ebenfalls zu dem Ausgangsventil 34 führt. Schließlich ist noch eine Steuerung 40 für die gesamte Waschmaschine 11 bzw. für sämtliche Funktionsmodule darin vorgesehen, insbesondere die vorgenannten Funktionsmodule.

Wie aus der Darstellung der verschiedenen Ventile und Leitungen ersichtlich ist, kann aus der Trommel 14 austretendes Wasser entlang der Ablaufleitung 19 durch den Filter 50 strömen und darin sowohl grob als auch fein gefiltert werden, also zweimal gefiltert werden. Das somit gut gefilterte Wasser tritt am Filterwasserausgang 27 aus dem Filter 50 aus und kann über das Pumpenventil 29 und die Pumpe 30 beispielsweise wieder zur Einspritzvorrichtung 17 gepumpt werden, möglicherweise unter Aufwärmen, wenn warmes Wasser benötigt wird. Es kann auch zum Auslauf 37 herausgepumpt werden. Frisches Wasser kann mittels des Zulaufventils 23 am Zulauf 22 eingelassen werden und tritt über die Zulaufleitung 25 zu einem hier nicht dargestellten Rückspül-Einlass in den Filter 50 ein, um diesen mit dem Wasserdruck des Frischwassers alleine rückzuspülen. Beim Rückspülen ausgespültes Filtrat wird über die Filtratleitung 41 und das Ausgangsventil 34 sowie das Auslaufventil 36 zum Auslauf 37 herausgespült. Alternativ könnte es auch gesammelt und separat entsorgt werden.

Es ist auch möglich, dass Wasser aus dem Zulauf 22, also Frischwasser, für einen Waschvorgang vor dem Filter 50 in den Wasserkreislauf gegeben wird. Alternativ kann es über das Pumpenventil 29, wenn dieses beispielsweise als Vier-Wege-Ventil ausgebildet ist, zur Pumpe 30 und somit in die Trommel 14 gelangen.

Des Weiteren weist die Waschmaschine 11 eine Steuerung 40 auf, die auf hier nicht dargestellte Art und Weise mit den genannten Funktionseinheiten verbunden ist und diese insbesondere ansteuert. Vorteilhaft ist diese Steuerung 40 die einzige Steuerung für die gesamte Waschmaschine 11. Sie kann ein Rückspülen automatisiert bzw. eigenständig veranlassen. Alternativ kann dies eine Bedienperson gezielt veranlassen.

In der Fig. 2 ist der erfindungsgemäße Filter 50 schematisiert in Seitenansicht dargestellt im Schnitt. Der Filter 50 weist das Filtergehäuse 51 auf als äußeres Gehäuse, in dem sich ein Innengehäuse 53 befindet. Vorteilhaft weist dies korrespondierende Form auf und ist nur wenig kleiner als das Filtergehäuse 51. Das Innengehäuse 53 ist relativ zu dem Filtergehäuse 51 um die gestrichelt dargestellte Drehachse verdrehbar um einen geringen Winkel bis beispielsweise 45° oder bis 30°. Für diese Verdrehung ist ein Drehantrieb 47 schematisch dargestellt, beispielsweise ein Schrittmotor, ggf. mit einer Kupplung. Wenn das Filtergehäuse 51 starr und unbewegbar in der Waschmaschine 11 angeordnet ist, so kann das Innengehäuse 53 um die Drehachse mittels des Drehantriebs 47 verdreht werden, so dass die darin angeordneten Filter eine unterschiedliche Lage einnehmen. Durch Veränderung der wirkenden Schwerkraft kann somit eine Veränderung des Filtergrads dieser Filter erreicht werden.

Von links wird das Filtergehäuse 51 mittels eines Deckels 52 verschlossen, der beispielsweise schraubbar ist, was die Entnahme von Grobteilen wie Knöpfen usw. erlaubt. Im Inneren des Filtergehäuses 51 ist eine Filterkammer 54 vorgesehen, die sozusagen den gesamten Innenraum mit Filtern bezeichnet. In dieser Filterkammer 54 ist im oberen Bereich von schräg rechts oben nach links unten verlaufend ein Grob-Filter 55 als erfindungsgemäßer Flächenfilter angeordnet. Mit etwas Abstand darunter ist mit ähnlicher Schrägstellung ein Fein-Filter 65 angeordnet, der ebenfalls als Flächenfilter ausgebildet ist. Grob-Filter 55 und Fein-Filter 65 sind am Innengehäuse 53 gelagert. Oberhalb des Grob-Filters 55 ist eine Grob-Filtratkammer 57 gebildet. Unterhalb davon sowie oberhalb des Fein-Filters 65 ist eine Fein-Filtratkammer 67 gebildet. In der Grob-Filtratkammer 57 bzw. in der Fein-Filtratkammer 67 sammelt sich jeweils von den entsprechenden Filtern zurückgehaltenes Grob-Filtrat und Fein-Filtrat. Das von oben zum Schmutzwassereingang 21 eintretende Wasser durchläuft also zuerst den Grob-Filter 55 und dann den Fein-Filter 65. Anschließend kann es unten rechts am Filterwasserausgang 27 austreten und beispielsweise über das Pumpenventil 29 gemäß Fig. 1 von der Pumpe 30 weitergepumpt werden. Dieses Wasser ist somit zweimal gefiltert, einmal grob und einmal fein. So kann verhindert werden, dass die Pumpe 30 durch zu große Teile im Wasser, beispielsweise Grobteile oder groben Schmutz, beschädigt werden kann. Des Weiteren können sich die herausgefilterten Teile nicht in der Pumpe 30 ansammeln oder anlagern. Außerdem ist es möglich, störende Bestandteile wie beispielsweise Mikrofasern durch Verwendung eines entsprechenden Fein-Filters 65 so herauszufiltern, dass sie aus dem gesamten Wasserkreislauf entnommen werden können.

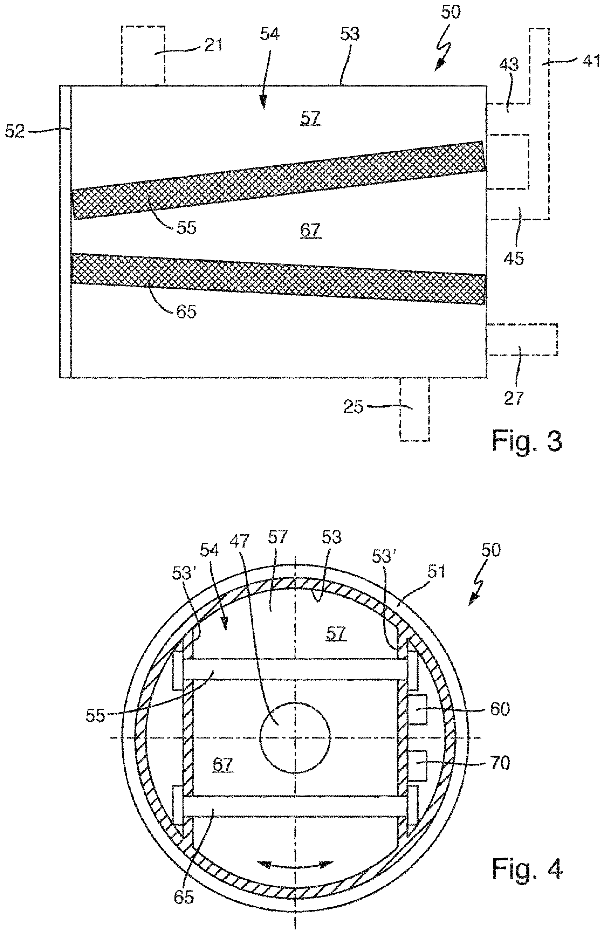

Aus der nochmals vereinfachten seitlichen Schnittdarstellung der Fig. 3 ist zu erkennen, wie eine Schrägstellung eines der Filter 55 oder 65 auch anders sein kann. Der obere Grob-Filter 55 weist ähnliche Schrägstellung auf wie in Fig. 2. Der darunter angeordnete Fein-Filter 65 dagegen ist von links oben nach rechts unten leicht schräg geneigt. Daraus resultiert hier möglicherweise ein leichteres Rückspülen des Filters 50, bei dem mittels der Zulaufleitung 25 Wasser, insbesondere Frischwasser, von unten in den Filter 50 bzw. in das Innengehäuse 53 einströmt. In der Fein-Filtratkammer 67 befindet sich auf dem Fein-Filter 65 herausgefiltertes Fein-Filtrat, das also oben auf dem Fein-Filter 65 liegt und dort verteilt ist. Dieses Fein-Filtrat wird beim Rückspülen zu einem Fein-Filtratausgang 45 herausgespült und in die Filtratleitung 41 gespült, um es dann wie vorbeschrieben zu entfernen bzw. zu entsorgen. Des Weiteren strömt das eingeleitete Wasser aus der Zulaufleitung 25 auch von unten durch den Grob-Filter 55 nach oben. Auf diesem Weg kann das Wasser auch auf dem Grob-Filter 55 angesammeltes herausgefiltertes Grob-Filtrat mitreißen und zum Grob-Filtratausgang 43 heraus in die Filtratleitung 41 ausspülen. Möglicherweise kann dabei auch ein Teil des Fein-Filtrats von unten durch den Grob-Filter 55 gedrückt werden, was aber nicht stört, da es diesen recht problemlos durchtreten kann. Unter Umständen könnte es auch möglich sein, auf den Fein-Filtratausgang 45 zu verzichten und sämtliches Filtrat oberhalb des Grob-Filters 55 aus dem Filtergehäuse 51 herauszuspülen. Die Verwendung von zwei Filtratausgängen hat sich jedoch als vorteilhaft herausgestellt. Sie werden außerhalb des Filters 50 ja auch zusammengeführt.

In weiterer Abwandlung könnte ein Grob-Filtratausgang auch links am Filtergehäuse 51, also an der gegenüberliegenden Seite, vorgesehen sein bei der hier ausgebildeten Schrägstellung des Grob-Filters 55. Dann wäre der Weg zum Ausspülen für Grob-Filtrat, das sich eher links unten angesammelt hat, geringer.

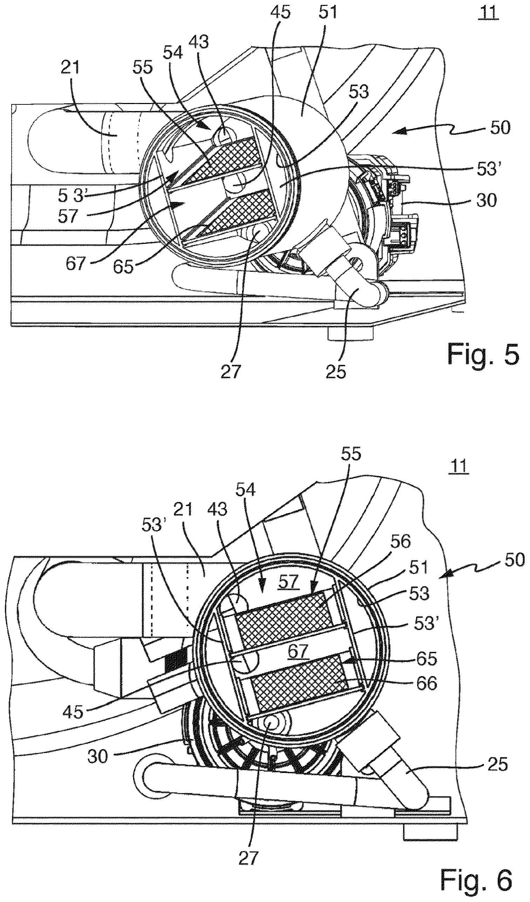

Eine Möglichkeit zur Änderung der Lage bzw. der Anordnung der Flächenfilter ist in der Fig. 4 zusammen mit den Fig. 5 und 6 dargestellt. Bei der Fig. 4 verläuft die Drehachse aus Fig. 2 senkrecht zur Zeichenebene, hinten ist der Drehantrieb 47 vorgesehen. Es ist zu erkennen, dass das Innengehäuse 53 relativ eng im Filtergehäuse 51 verläuft und vorteilhaft gegenüber diesem an mehreren Stellen abgedichtet ist. Während das Innengehäuse 53 im Wesentlichen auch rohrförmig ist, weist es links und rechts um dasselbe Maß nach innen versetzt zwei parallele Innenwände 53` auf. An diesen Innenwänden 53` sind oben der Grob-Filter 55 und unten der Fein-Filter 65 befestigt. Im hier dargestellten Ausführungsbeispiel sind sie drehbar an der Innenwand 53' gelagert. Dabei reichen kurze Achsstummel sowohl von Grob-Filter 55 als auch von Fein-Filter 65 durch die Innenwände 53`. Um diese Achsstummel können Grob-Filter 55 und Fein-Filter 65 unabhängig voneinander um Drehachsen verdreht bzw. verschwenkt werden, die in der Zeichenebene verlaufen und rechtwinklig zu den Innenwände 53` sind.

Wie durch den Pfeil unten dargestellt ist, kann das Innengehäuse 53 mittels des Drehantriebs 47 zumindest um geringe Drehwinkel verdreht werden. So können eine Filterfläche des Grob-Filters 55 und des Fein-Filters 65 links herum oder rechtsherum und gemeinsam verkippt werden. Dies kann zusätzlich oder alternativ zum vorgenannten Verdrehen erfolgen.

Für weitere Beeinflussungen der Filter sind an der rechten Innenwand 53' oben ein Grob-Filteraktor 60 und unten ein Fein-Filteraktor 70 angeordnet. Mit derartigen Aktoren kann, wie nachfolgend noch näher erläutert wird, auch eine direkte Formänderung der Flächenfilter bzw. von Grob-Filter 55 und/oder Fein-Filter 65 erfolgen und somit auch direkt eine Änderung deren Filtergrads. Möglicherweise kann dadurch auch ein vorgenanntes Verdrehen der Filter erfolgen.

In der Fig. 5 ist leicht schräg und in der Fig. 6 von vorne ein Schnitt durch den erfindungsgemäßen Filter 50 in der Waschmaschine 11 dargestellt. Hier ist zu ersehen, wie von links der Schmutzwassereingang 21 von der Trommel der Waschmaschine Wasser heranführt an den Filter 50 und dieses in die Filterkammer 54 allgemein und vor allem zuerst einmal in die Grob-Filtratkammer 57 eintritt. Mittels des den Boden davon bildenden Grob-Filters 55 werden Grob-teile aus dem eintretenden Schmutzwasser herausgefiltert und bleiben oben auf dem Grob-Filter 55 liegen. Das Wasser und auch Feinteile treten durch den Grob-Filter 55 hindurch und gelangen in die Fein-Filtratkammer 67, die nach unten vom Fein-Filter 65 mit seiner Fein-Filterfläche 66 begrenzt wird. Da der Fein-Filter 65 auch die Feinteile zurückhält, tritt nur Wasser durch ihn hindurch, welches zum Filterwasserausgang 27 als fein gefiltertes Wasser austreten kann. Es läuft dann gemäß Fig. 1 zu der Pumpe 30 und wird weitergepumpt.

Durch die erkennbare gleichmäßige Schrägstellung der beiden Filter 55 und 65 erfolgt eine Beeinflussung von deren Filterwirkung. Des Weiteren werden vom Grob-Filter 55 herausgefilterte Grobteile und vom Fein-Filter 65 herausgefilterte Feinteile als Filtrat eher nach links rutschen und sind somit näher beim Grob-Filtratausgang 43 bzw. beim Fein-Filtratausgang 45. So kann deren Entfernen über Rückspülen mittels Wasser in der Zulaufleitung 25 vereinfacht werden.

Es ist auch möglich, dass das Innengehäuse 53 während des Filtervorgangs nicht verdreht ist, sondern von der Steuerung 40 mittels des Drehantriebs 47 erst für einen Rückspülvorgang entsprechend verdreht wird.

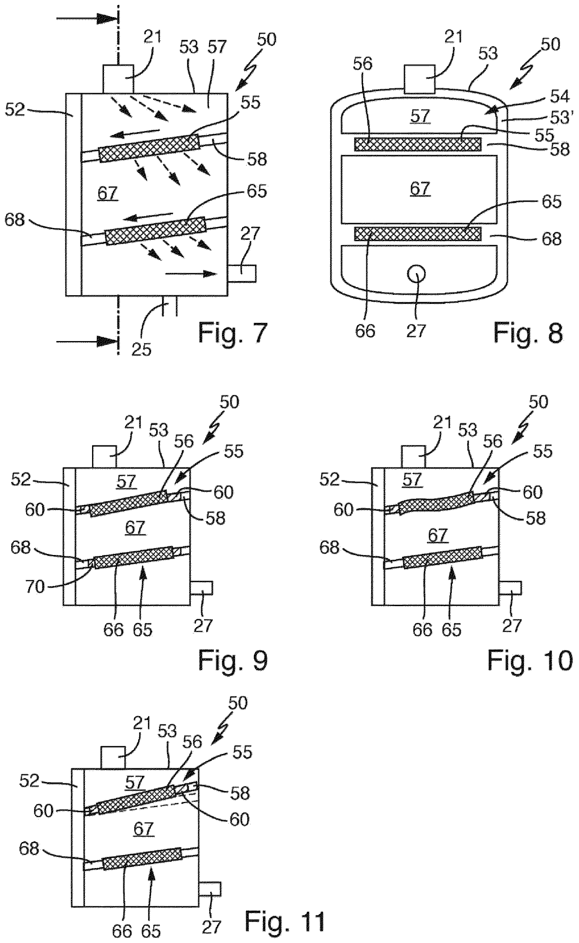

In der Fig. 7 sind in stark vereinfachter Seitenansicht ähnlich der Fig. 3 der Wasserfluss und die Bewegung von Filtrat dargestellt. Zum Schmutzwassereingang 21 kommt gestrichelt dargestelltes schmutziges Wasser in das Innengehäuse 53 bzw. in die Filterkammer 54. Es trifft auf den oberen Grob-Filter 55, welcher Grobteile zurückhält, Wasser und Feinteile aber nach unten durchlässt. Somit sammeln sich gemäß dem durchgezogenen Pfeil mit Rutschrichtung nach links Grobteile in dem Bereich hin zum Deckel 52. Gemäß der weiteren gestrichelten Pfeile tritt Wasser mit Feinteilen als Schmutz durch den Grob-Filter 55 nach unten hindurch und gelangt in die darunterliegende Fein-Filtratkammer 67. Dort trifft dieses mit Feinteilen verschmutzte Wasser auf den Fein-Filter 65, der auch die Feinteile zurückhält. Das zweifach gefilterte Wasser tritt dann unten durch den Fein-Filter 65 hindurch und zum Filterwasserausgang 27 aus dem Filter 50 heraus. Auch Feinteile sammeln sich entlang der Fein-Filterfläche 66 des Fein-Filters 65 gemäß dem durchgezogenen Pfeil nach links hin zum Deckel 52. Durch die vorgenannten Möglichkeiten zur Beeinflussung des Grob-Filters 55 und/oder des Fein-Filters 65 kann deren Filtergrad verändert werden während des Filterns, beispielsweise weil die Waschmaschine 11 über ihre Steuerung 40 erkannt hat, dass feiner gefiltert werden muss oder gröber gefiltert werden kann. Auch kann beispielsweise nach Erkennen einer bestimmten Faserart, vorzugsweise Mikrofasern, der Filtergrad verändert werden. Vorzugsweise kann angestrebt werden, Mikrofasern von zu waschender Wäsche stärker herauszufiltern, um sie dem Wasserkreislauf entziehen zu können. Somit ist es möglich, vor dem Filtern oder während des Filterns von Wasser während eines Waschvorgangs den Filtergrad zumindest in gewissen Grenzen zu ändern.

In der Fig. 8 ist in Darstellung ähnlich der Fig. 4 von vorne im Schnitt dargestellt, wie Grob-Filter 55 mit Grob-Filterfläche 56 und Fein-Filter 65 mit Fein-Filterfläche 66 parallel zueinander verlaufen bzw. angeordnet sind. Zu ersehen ist hier auch ein Grob-Filterrahmen 58, der den Grob-Filter 55 umrahmt bzw. einmal umläuft und somit auch hält. In entsprechender Form ist ein Fein-Filterrahmen 68 um den Fein-Filter 65 herum vorgesehen. Die Filterrahmen 58 und 68 können nicht nur dazu dienen, die jeweilige Filterfläche 65 bzw. 66 zu halten und einzuspannen. Sie können auch dazu dienen, ggf. zusammen mit dem vorgenannten Grob-Filteraktor 60 und Fein-Filteraktor 70, die Form der jeweiligen Filterfläche zu beeinflussen. Dazu können die Filterrahmen 58 und 68 aus Material bestehen, welches seine Form ändern kann durch äußere Beeinflussung, beispielsweise als sogenannte Formgedächtnis-Legierung durch Wärmebeeinflussung.

So ist beispielsweise aus der Fig. 9, die im Prinzip ähnlich ist wie die Fig. 7, zu ersehen, dass dort der Grob-Filter 55 im Vergleich zu seiner mit Strichen dargestellten normalen Position etwas gegen den Uhrzeigersinn verdreht ist. Hierfür ist seine Grob-Filterfläche 56 in Grob-Filteraktoren 60 als Filterrahmen eingespannt bzw. wird von diesem gehalten. Durch Beeinflussung der Grob-Filteraktoren 60 erfolgt diese zugegebenermaßen geringfügige Verdrehung. Für den Fein-Filter 65 ist zu erkennen, dass dort ebenfalls Fein-Filteraktoren 70 vorgesehen sind. Diese wurden allerdings nicht zu einer Formänderung und/oder Lageänderung des Fein-Filters 65 genutzt.

In der weiteren Darstellung der Fig. 10 ist zu erkennen, dass beim Grob-Filter 50 die Grob-Filteraktoren 60 eine Stauchung als Formänderung bewirkt haben. Der Grob-Filter 55 bzw. seine Grob-Filterfläche 56 dazwischen sind etwas verkürzt worden, wodurch sie sich etwas wellt, wie zu ersehen ist. Auch dadurch werden die Filterwirkung bzw. der Filtergrad des Grob-Filters 55 oder seiner Grob-Filterfläche 56 verändert, insbesondere wird der Filtergrad erhöht bzw. einzelne Filtermaschen werden kleiner. Eine solche Veränderung kann allgemein entweder zum Filtern von Schmutzwasser oder beim Rückspülen vorgenommen werden. In der Regel wird eine Stauchung der Filterfläche eine Verengung von dessen Filtermaschen und somit ein Erhöhen des Filtergrads bewirken, es werden also immer kleinere Teile zurückgehalten. Somit kann diese Form des Grob-Filters 50 bzw. der Grob-Filterfläche 56 zum normalen Filtern von Schmutzwasser verwendet werden. Zum Rückspülen kann es gerade von Vorteil sein, wenn der Filtergrad sozusagen verringert wird bzw. Filtermaschen größer werden, so dass darin gefangene Grob-Teile oder darin gefangenes Filtrat besser beim Rückspülen herausgelöst und entfernt werden können. Hierfür sollte eine Filterfläche natürlich entsprechend ausgebildet sein, vorteilhaft als Drahtsieb odgl..

Für den Fein-Filter 65 ist keine Beeinflussung dargestellt, dies kann aber vorteilhaft auf dieselbe Art und Weise erfolgen wie beim Grob-Filter 55, selbst wenn der Filtergrad an sich ein anderer ist. Er ist nämlich deutlich höher für die Feinfilterung.

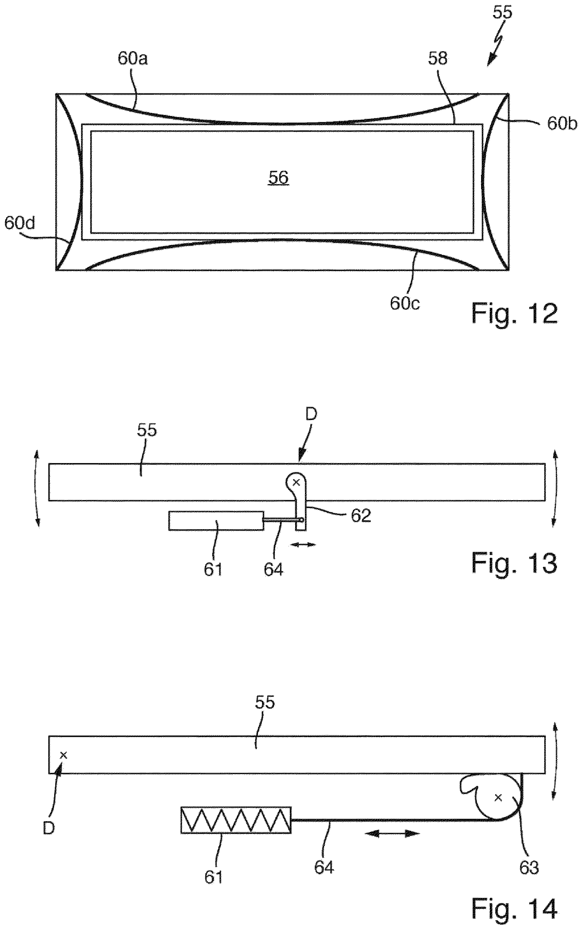

In der Fig. 11 ist in Anlehnung an die Fig. 9 dargestellt, wie durch die Grob-Filteraktoren 60 der Grob-Filter 55 mit der Grob-Filterfläche 56 im rechten Bereich angehoben worden ist aus der gestrichelt dargestellten Stellung heraus. Somit ist die Schrägstellung des Grob-Filters 55 verändert, wodurch vor allem beim Filtern von Schmutzwasser aus dem Schmutzwassereingang 21 und weniger beim Rückspülen der Filtergrad verändert werden kann. Beispiele hierfür sind in den Fig. 13 und 14 nachher noch dargestellt und werden dort erläutert. Je schräger eine Filterfläche angeordnet wird, hier die Grob-Filterfläche 56, desto weniger Teile gelangen durch sie hindurch nach unten bzw. werden sozusagen herausgefiltert. Auch in der Fig. 11 ist für den Fein-Filter 65 bzw. dessen Fein-Filterfläche 66 keine Beeinflussungsmöglichkeit bzw. keine Veränderung des Filtergrads oder der Anordnung dargestellt.

In der Fig. 12 ist eine Draufsicht auf den Grob-Filter 55 dargestellt mit seiner Grob-Filterfläche 56. In ähnlicher Form kann auch eine Anordnung für den Fein-Filter samt Fein-Filterfläche 66 vorgesehen sein. Ein Grob-Filterrahmen 58, an dem die Grob-Filterfläche 56 beispielsweise als Sieb bzw. Drahtgeflecht befestigt ist, weist rechteckige Form auf und wird außen von vier bogenförmigen bzw. gebogenen Grob-Filteraktoren 60a bis 60d gehalten. Diese Filteraktoren 60a bis 60d sind hier als Bimetallstreifen ausgebildet. Diese Grob-Filteraktoren 60 als Bimetallstreifen können entweder so ausgebildet sein, dass sie bei zunehmender Temperatur im Bereich zwischen 15°C und 60°C oder sogar bis 90°C ihre Biegung verringern und somit in dem Bereich, in dem sie an dem Grob-Filterrahmen 58 befestigt sind, von dessen Mittelbereich weg nach außen ziehen. So würden beispielsweise die gegenüberliegenden Grob-Filteraktoren 60a und 60c bzw. 60b und 60d die Grob-Filterfläche 56 auseinanderziehen und somit dehnen. Dadurch würde eine Maschenweite erweitert bzw. vergrößert und der Filtergrad entsprechend verringert, was eben vor allem für ein Rückspülen gut wäre. Alternativ können die Aktoren genau andersherum ausgebildet sein, sich also bei abnehmenden Temperaturen in diese Richtung ausdehnen und bei zunehmenden Temperaturen die Grob-Filterfläche 56 mehr stauchen, was zu einer Verringerung der Größe der Filtermaschen und somit zu einer Erhöhung des Filtergrads führen würde. Dies kann beispielsweise genutzt werden, um beim Rückspülen mit Frischwasser vom Zulauf 22, das in der Regel ziemlich kalt ist, ein besseres Rückspülen durch Veränderung des Filtergrads zu ermöglichen.

Somit können die Grob-Filteraktoren 60 in Form von Bimetallstreifen durch eine Temperatur des in den Filter 50 einströmenden Wassers verändert werden, aus welcher Richtung dieses Wasser auch immer kommen mag. Alternativ könnten natürlich Beheizungen für die bimetallischen Grob-Filteraktoren 60 vorgesehen sein, die separat von der Steuerung 40 ansteuerbar sind zur gezielten Ansteuerung unabhängig von einer Wassertemperatur.

Im Vergleich mit der Fig. 4 ist zu erkennen, dass die Grob-Filteraktoren 60 auch außerhalb der Innenwände 53` bzw. außerhalb der Filterkammer 54 bzw. der Grob-Filtratkammer 57 und der Fein-Filtratkammer 67 angeordnet sein können. Dann können Ausgestaltung und Ansteuerung möglicherweise vereinfacht sein.

Anstelle von Grob-Filteraktoren 60, die auf einen Grob-Filterrahmen 58 bzw. einen Fein-Filterrahmen drücken, könnten die Filterrahmen selbst auch aus Formgedächtnis-Legierung oder aus bimetallischem Material bestehen. So können sie direkt ihre Form ändern und damit direkt die jeweilige Filterfläche beeinflussen, also den Filtergrad erhöhen oder verringern. Gerade auch durch die Verwendung von Formgedächtnis-Legierungen anstelle von Bimetallen können komplexere Formänderungen erfolgen, beispielsweise auch ein Wellen eines Filters in der Seitenansicht, ähnlich wie dies in der Fig. 10 dargestellt ist. Dieses wird dann nicht durch Drücken bzw. Stauchen erreicht, sondern formt sich sozusagen selbst aus. Auch eine Filterfläche selbst kann allgemein aus einer Formgedächtnis-Legierung bestehen. So kann sie sich selbst direkt verformen, beispielsweise wellig sein oder flach bzw. plan. So kann sie selbst auf vorgenannte Art und Weise ihren Filtergrad verändern bzw. erhöhen oder verringern.

In der Fig. 13 ist eine nochmals weitere Möglichkeit dargestellt, wie eine Anordnung eines Filters beeinflusst werden kann. Der Grob-Filter 55, was aber auch für den Fein-Filter 65 gelten kann, ist hier mittig mit einer durchgehenden Drehachse, die senkrecht zur Zeichenfläche verläuft, entsprechend einem Drehpunkt D an dem Innengehäuse 53 bzw. an den Innenwänden 53` drehbar gelagert. In diesem Bereich ist ein Anlenkhebel 62 an dem Grob-Filter 55 befestigt, vorteilhaft an dessen Filterrahmen. Ein Grob-Filterantrieb 61 wirkt mittels eines Übertragungsglieds 64 auf den Anlenkhebel 62 derart ein, dass der Anlenkhebel 62 und somit auch der Grob-Filter 65 um den Drehpunkt D herum im Uhrzeigersinn oder entgegen dem Uhrzeigersinn verdreht werden. Der Grob-Filterantrieb 61 kann dabei ein Elektromagnet, ein Hydraulik- oder Pneumatikzylinder, ein Linearmotor sein oder auch als Bimetall bzw. als Formgedächtnis-Legierung ausgebildet sein. Jedenfalls sollte er genau ansteuerbar sein, um ein Verdrehen des Grob-Filters 55 und somit eine Veränderung von dessen Winkel der Filterfläche 56 zur Horizontalen genau einstellen zu können. Alternativ können zwei Anschläge vorgesehen sein, die sozusagen zwei Endstellungen und somit genau zwei unterschiedliche Stellungen der Filterfläche 56 zur Horizontalen bewirken.

In der Fig. 14 ist eine Alternative für eine Verstellung des Grob-Filters 55 dargestellt. Dieser weist einen Drehpunkt D mit entsprechender Drehachse ganz links auf, um welche er verdrehbar oder verschwenkbar ist. Es ist ein weiterer Grob-Filterantrieb 61 vorgesehen, der mittels eines Übertragungsglieds 64, welches um eine Umlenkung 63 verläuft, mit dem rechten Ende des Grob-Filters 55 verbunden ist. Hier erfolgt ein Verdrehen des Grob-Filters um den am linken Ende angeordneten Drehpunkt D entsprechend einer Auslenkung durch den Grob-Filterantrieb 61. Dieser ist hier als Schraubenfeder dargestellt, die aus einer Formgedächtnis-Legierung besteht. Wird sie auf eine relativ hohe Temperatur von 40°C oder darüber erwärmt, dehnt sie sich aus, das Übertragungsglied 64 bewegt sich nach rechts und somit verschwenkt der Grob-Filter 55 um den Drehpunkt D entgegen dem Uhrzeigersinn. Wird der Grob-Filterantrieb 61 gekühlt bzw. auf eine Temperatur von beispielsweise unter 20°C gebracht, beispielsweise durch eintretendes Frischwasser in die Waschmaschine 11, so zieht er sich zusammen. Durch die Schraubenfederform des Materials der Formgedächtnis-Legierung kann hier eine solche Verkürzung besonders gut erfolgen. Damit bewegt sich das Übertragungsglied 64 wieder nach links und verdreht den Grob-Filter 65 im Uhrzeigersinn um den Drehpunkt D, möglicherweise so lange, bis er an der Umlenkung 63 anschlägt.

## Patentansprüche

1. Filtervorrichtung (50) für ein wasserführendes Haushaltsgerät (11), wobei die Filtervorrichtung (50) aufweist:
- ein durchströmtes Filtergehäuse (51) mit Schmutzwassereingang (21), Filterwasserausgang (27) und Filtratausgang (43, 45),
- mindestens einen Flächenfilter (55, 65) und eine Halterung für den Flächenfilter (55, 65) in dem Filtergehäuse (51), wobei der Flächenfilter (55, 65) eine Maschenweite und einen Winkel zur Horizontalen aufweist,
- eine Filtratkammer (57, 67) in dem Filtergehäuse (51) zum Sammeln von Filtrat, das von dem Flächenfilter (55, 65) zurückgehalten worden ist,
wobei der Flächenfilter (55, 65), der Schmutzwassereingang (21) und der Filterwasserausgang (27) derart zueinander angeordnet sind, dass eine Durchflussrichtung für Wasser vom Schmutzwassereingang (21) bis zum Filterwasserausgang (27) durch den Flächenfilter (55, 65) verläuft,
wobei die Filtratkammer (57, 67) mittels des Filtratausgangs (43, 45) zugänglich ist zum Entfernen des Filtrats aus der Filtratkammer (57, 67),
**dadurch gekennzeichnet, dass**
- der mindestens eine Flächenfilter (55, 65) formveränderlich ist zur Veränderung seiner Maschenweite.

2. Filtervorrichtung nach Anspruch 1, **dadurch gekennzeichnet, dass** der Filtratausgang (43, 45) direkt zu der Filtratkammer (57, 67) geht, wobei vorzugsweise der Filtratausgang (43, 45) mittels eines Kammerverschlusses am Filtergehäuse (51) verschließbar und öffenbar ist.

3. Filtervorrichtung nach Anspruch 1 oder 2, **dadurch gekennzeichnet, dass** der mindestens eine Flächenfilter (55, 65) ebene Form aufweist, wobei vorzugsweise alle Flächenfilter (55, 65) ebene Form aufweisen, wobei insbesondere der mindestens eine Flächenfilter (55, 65) plan ist.

4. Filtervorrichtung nach einem der vorhergehenden Ansprüche, **dadurch gekennzeichnet, dass** die Filtervorrichtung (50) mindestens 2 Flächenfilter (55, 65) aufweist, insbesondere mit unterschiedlichem Filtergrad für die Filterung, wobei vorzugsweise die beiden Flächenfilter (55, 65) in der Durchflussrichtung des Wassers hintereinander in dem Filtergehäuse (51) angeordnet sind.

5. Filtervorrichtung nach Anspruch 4, **dadurch gekennzeichnet, dass** die beiden Flächenfilter (55, 65) übereinander und in ggf. zueinander parallelen Ebenen angeordnet sind, wobei insbesondere ein erster Flächenfilter (55) oberhalb eines zweiten Flächenfilters (65) angeordnet ist, wobei der Schmutzwassereingang (21) in der Durchflussrichtung vor bzw. über dem oberen ersten Flächenfilter (55) angeordnet ist und der Filterwasserausgang (27) in der Durchflussrichtung hinter bzw. unter dem unteren zweiten Flächenfilter (65) angeordnet ist.

6. Filtervorrichtung nach Anspruch 4 oder 5, **dadurch gekennzeichnet, dass** ein Grob-Flächenfilter (55) für einen Grob-Filtergrad und ein Fein-Flächenfilter (65) für einen Fein-Filtergrad ausgebildet ist, wobei vorzugsweise der obere erste Flächenfilter (55) den Grob-Filter bildet, insbesondere für Grobteile mit mehr als 2 mm Durchmesser, und wobei der untere zweite Flächenfilter (65) den Fein-Filter bildet, insbesondere für Verunreinigungen oder Partikel größer als 1 µm oder größer als 50 µm Durchmesser.

7. Filtervorrichtung nach einem der vorhergehenden Ansprüche, **dadurch gekennzeichnet, dass** der mindestens eine Flächenfilter (55, 65) schräg gestellt ist mit einem Winkel zwischen 0° und 30° zur Horizontalen, wobei ein nach unten weisender bzw. nach unten geneigter Außenrand des Flächenfilters (55, 65) hin zu der Filtratkammer (57, 67) weist, insbesondere in vertikaler Linie direkt über der Filtratkammer (57, 67) liegt.

8. Filtervorrichtung nach Anspruch 4, **dadurch gekennzeichnet**, das ein erster Flächenfilter (55) unterhalb des Schmutzwassereingangs (21) angeordnet ist und schräg gestellt ist mit einem Winkel zwischen 0° und 30° zur Horizontalen, wobei die Durchflussrichtung durch den ersten Flächenfilter (55) hindurch direkt zum Filterwasserausgang (27) geht, wobei ein unterer Außenrand des ersten Flächenfilters (55) über der Filtratkammer (57, 67) endet, wobei an der Filtratkammer (57, 67) ein zweiter Flächenfilter (65) angeordnet ist, insbesondere in vertikaler Ausrichtung, der zwischen der Filtratkammer (57, 67) und dem Filterwasserausgang (27) angeordnet ist derart, dass durch den zweiten Flächenfilter (65) hindurchtretendes gefiltertes Wasser mit dessen Filtergrad gefiltert ist, wobei vorzugsweise der erste Flächenfilter (55) ein Grob-Filter nach Anspruch 6 ist und einen Grob-Filtergrad aufweist und der zweite Flächenfilter (65) ein Fein-Filter nach Anspruch 6 ist und einen Fein-Filtergrad aufweist.

9. Filtervorrichtung nach einem der vorhergehenden Ansprüche, **gekennzeichnet durch** eine Aktoreinrichtung (60, 70), die an dem Flächenfilter (55, 65) angeordnet ist und die zu dessen Formveränderung ausgebildet ist, insbesondere dazu ausgebildet ist, den Flächen-filter (55, 65) einfach oder mehrfach zu verbiegen, zu verdrehen oder zu stauchen, wobei der Flächenfilter (55, 65) Filtermaschen aufweist, die sich durch die Formveränderung derart verändern und deren Maschenweite sich derart verändert, dass bei einem Rückspülen des Flächenfilters (55, 65) entgegen der Durchflussrichtung des Wassers daran festgesetzte Verunreinigungen lösbar sind, wobei vorzugsweise die Aktoreinrichtung (60, 70) bimetallisch, als Formgedächtnis-Legierung, Form veränderlich durch Ändern eines pH-Werts ihrer Umgebung, elektromotorisch, elektromagnetisch oder elektrothermisch arbeitend ausgebildet ist.

10. Filtervorrichtung nach einem der vorhergehenden Ansprüche, **dadurch gekennzeichnet, dass** der Flächenfilter (55, 65) eine auxetische Struktur aufweist, wobei insbesondere die Filtermaschen nach Anspruch 9 durch die auxetische Struktur in ihrer Größe bzw. Maschenweite veränderbar sind.

11. Filtervorrichtung nach einem der vorhergehenden Ansprüche, **dadurch gekennzeichnet, dass** ein Teil eines Rahmens (58, 68) des Flächenfilters (55, 65) oder eine Halterung für den Flächenfilter (55, 65) aus einer Formgedächtnis-Legierung besteht oder eine Aktoreinrichtung (60, 70) aufweist, die aus einer Formgedächtnis-Legierung besteht, wobei eine Formänderung der Formgedächtnis-Legierung temperaturabhängig ist und wobei eine Auslöse-Temperatur für die Formänderung zwischen 40°C und 80°C liegt.

12. Filtervorrichtung nach einem der vorhergehenden Ansprüche, **dadurch gekennzeichnet, dass** dem mindestens einen Flächenfilter (55, 65) oder der Aktoreinrichtung (60, 70) nach Anspruch 9 oder 11 eine Heizung zugeordnet ist, wobei insbesondere die Heizung mit Abstand von weniger als 2 cm zu dem Flächenfilter (55, 65) oder der Aktoreinrichtung (60, 70) im Filtergehäuse (51) angeordnet ist oder die Heizung Bestandteil einer Filterfläche des Flächenfilters (55, 65) selbst ist.

13. Filtervorrichtung nach einem der vorhergehenden Ansprüche, **dadurch gekennzeichnet, dass** das Filtergehäuse (51) oder der mindestens eine Flächenfilter (55, 65) drehbar ausgebildet sind, vorzugsweise um 180° um eine horizontale Drehachse drehbar ausgebildet sind, wobei insbesondere für die Drehbarkeit ein außerhalb des Filtergehäuses (51) angeordneter Drehantrieb (47, 61) vorgesehen ist, wobei vorzugsweise der Drehantrieb (47, 61) elektromotorisch, elektromagnetisch oder elektrothermisch arbeitend ausgebildet ist.

14. Wasserführendes Haushaltsgerät mit einer Filtervorrichtung (50) nach einem der vorhergehenden Ansprüche, wobei das Haushaltsgerät (11) aufweist:
- eine Behandlungskammer (14) für zu reinigende Gegenstände,
- Wasserleitungen (19, 39) hin zu der Behandlungskammer (14) und weg von der Behandlungskammer (14),
- Ventile (20, 36) in den Wasserleitungen (19, 39),
- Eine Pumpe (30) und eine Heizeinrichtung, die mit den Wasserleitungen (19, 39) zusammengeschaltet und mit der Behandlungskammer (14) verbunden sind sowie mit der Filtervorrichtung (50) verbunden sind,
- eine Gerätesteuerung (40).

15. Wasserführendes Haushaltsgerät nach Anspruch 14, **dadurch gekennzeichnet, dass** die Filtervorrichtung (50) in Durchflussrichtung von Wasser zwischen der Behandlungskammer (14) und der Pumpe (30) angeordnet ist, wobei vorzugsweise zwischen Behandlungskammer (14) und Filtervorrichtung (50) keine Funktionseinheiten außer Filtern/Sieben und Ventilen (20) angeordnet sind.

16. Verfahren zum Reinigen einer Filtervorrichtung (50) nach einem der Ansprüche 1 bis 13, **dadurch gekennzeichnet, dass**:
- Bei einem Filter-Betrieb der Filtervorrichtung (50) zu filterndes Wasser zum Schmutzwassereingang (21) in die Filtervorrichtung (50) eintritt bzw. hineingepumpt wird und gefiltertes Wasser zum Filterwasserausgang (27) austritt und mittels der Pumpe (30) im Haushaltsgerät (11) weitergepumpt wird,
- bei einem Rückspül-Betrieb der Filtervorrichtung (50) bzw. mindestens eines der Flächenfilter (55, 65) der Filtervorrichtung (50) die Form verändert wird.

17. Verfahren nach Anspruch 16, **dadurch gekennzeichnet, dass** die Form und/oder die Anordnung des Flächenfilters (55, 65) in dem Filtergehäuse (51) thermisch veränderbar ist durch Beheizen und/oder mechanisch veränderbar ist durch Verformen des Flächenfilters (55, 65).

18. Verfahren nach Anspruch 16 oder 17, **dadurch gekennzeichnet, dass** beim Rückspül-Betrieb des mindestens einen Flächenfilters (55, 65) die Pumpe (30) Wasser durch Wasserleitungen (32, 41) und Ventile (34) durch den Filterwasserausgang (27) oder durch einen separaten Rückspüleingang (43, 45) am Filtergehäuse (51) in das Filtergehäuse (51) hinein und entgegen der Durchflussrichtung des Wassers durch den mindestens einen Flächenfilter (55, 65) pumpt, insbesondere durch alle Flächenfilter (55, 65) hindurch, wobei vorzugsweise Verunreinigungen entweder in der Filtratkammer (57, 67) gesammelt werden oder zum Filtratausgang (43, 45) aus dem Filtergehäuse (51) herausgespült werden.

19. Verfahren nach einem der Ansprüche 16 bis 18, **dadurch gekennzeichnet, dass** beim Rückspül-Betrieb die Veränderung der Form und/oder der Anordnung des Flächenfilters (55, 65) in dem Filtergehäuse (51) erst erfolgt, nachdem Wasser von der Pumpe (30) entgegen der Durchflussrichtung durch den mindestens einen Flächenfilter (55, 65) gepumpt worden ist oder nachdem Frischwasser von außen mit Druck durch den mindestens einen Flächenfilters (55, 65) geleitet worden ist, vorzugsweise mindestens 2 sec danach.

20. Verfahren nach einem der Ansprüche 16 bis 19, **dadurch gekennzeichnet, dass** beim Filter-Betrieb mit dem Fein-Filtergrad nach Anspruch 6 oder 9 mehr als 50% des Wassers, das durch die Filtervorrichtung (50) gepumpt wird, in der Durchflussrichtung durch den Grob-Flächenfilter (55) mit dem Grob-Filtergrad gepumpt wird, wobei ein Anteil von weniger als 50%, insbesondere weniger als 20%, zusätzlich oder alternativ zum Grob-Flächenfilter (55) durch den Fein-Flächenfilter (65) gepumpt wird, wobei vorzugsweise beim Filter-Betrieb Wasser, das insgesamt mit dem Fein-Flächenfilter (65) zu filtern ist, mehrfach durch die Filtervorrichtung (50) gepumpt wird, wobei es dabei jeweils zu dem Anteil von weniger als 20% durch den Fein-Flächenfilter (65) gepumpt wird.

## Claims

1. Filter device (50) for a water-conducting domestic appliance (11), the filter device (50) having:
- a filter housing (51) with a dirty water inlet (21), a filtered water outlet (27) and a filtrate outlet (43, 45), through which flow takes place,
- at least one surface filter (55, 65) and a holder for the surface filter (55, 65) in the filter housing (51), the surface filter (55, 65) having a mesh size and an angle to the horizontal,
- a filtrate chamber (57, 67) in the filter housing (51) for collecting filtrate that has been retained by the surface filter (55, 65),
the surface filter (55, 65), the dirty water inlet (21) and the filtered water outlet (27) being arranged in relation to one another in such a way that a flow direction for water runs from the dirty water inlet (21) to the filtered water outlet (27) through the surface filter (55, 65), wherein the filtrate chamber (57, 67) is accessible by means of the filtrate outlet (43, 45) for removing the filtrate from the filtrate chamber (57, 67),
**characterized in that**
- the at least one surface filter (55, 65) is variable in shape for changing its mesh size.

2. Filter device according to claim 1, **characterized in that** the filtrate outlet (43, 45) leads directly to the filtrate chamber (57, 67), it being preferable for the filtrate outlet (43, 45) to be closable and openable by means of a chamber closure on the filter housing (51).

3. Filter device according to claim 1 or 2, **characterized in that** the at least one surface filter (55, 65) is of planar shape, preferably all surface filters (55, 65) being of planar shape, in particular the at least one surface filter (55, 65) being planar.

4. Filter device according to one of the preceding claims, **characterized in that** the filter device (50) has at least two surface filters (55, 65), in particular with different degrees of filtration, the two surface filters (55, 65) preferably being arranged one behind the other in the flow direction of the water in the filter housing (51).

5. Filter device according to claim 4, **characterized in that** the two surface filters (55, 65) are arranged one above the other and in planes which may be parallel to one another, in particular a first surface filter (55) being arranged above a second surface filter (65) , wherein the dirty water inlet (21) is arranged in front of or above the upper first surface filter (55) in the direction of flow and the filtered water outlet (27) is arranged behind or below the lower second surface filter (65) in the direction of flow.

6. Filter device according to claim 4 or 5, **characterized in that** a coarse surface filter (55) is designed for a coarse filter grade and a fine surface filter (65) is designed for a fine filter grade, the upper first surface filter (55) forms the coarse filter, in particular for coarse parts with a diameter of more than 2 mm, and the lower second surface filter (65) forms the fine filter, in particular for impurities or particles larger than 1 µm or larger than 50 µm in diameter.

7. Filter device according to one of the preceding claims, **characterized in that** the at least one surface filter (55, 65) is set obliquely at an angle between 0° and 30° to the horizontal, a downwardly pointing or downwardly inclined outer edge of the surface filter (55, 65) points towards the filtrate chamber (57, 67), in particular lies directly above the filtrate chamber (57, 67) in a vertical line.

8. Filter device according to claim 4, **characterized in that** a first surface filter (55) is arranged below the dirty water inlet (21) and is set at an angle of between 0° and 30° to the horizontal, the flow direction through the first surface filter (55) being directly to the filtered water outlet (27), a lower outer edge of the first surface filter (55) ends above the filtrate chamber (57, 67), a second surface filter (65) being arranged on the filtrate chamber (57, 67), in particular in a vertical orientation, which is arranged between the filtrate chamber (57, 67) and the filtered water outlet (27) in such a way that the filtered water passing through the second surface filter (65) is filtered with the filter degree thereof, wherein preferably the first surface filter (55) is a coarse filter according to claim 6 and has a coarse filter degree and the second surface filter (65) is a fine filter according to claim 6 and has a fine filter degree.

9. Filter device according to one of the preceding claims, **characterized by** an actuator device (60, 70) which is arranged on the surface filter (55, 65) and is designed to change its shape, in particular to bend, twist or compress the surface filter (55, 65) once or several times , twisting or compressing it, the surface filter (55, 65) having filter meshes which change as a result of the change in shape and whose mesh size changes in such a way that, when the surface filter (55, 65) is backwashed against the direction of flow of the water, preferably the actuator device (60, 70) being designed to be bimetallic, as a shape memory alloy, changeable in shape by changing a pH value of its environment, electromotive, electromagnetic or electrothermally operating.

10. Filter device according to one of the preceding claims, **characterized in that** the surface filter (55, 65) has an auxetic structure, in particular the filter meshes according to claim 9 being variable in size or mesh width, respectively, by means of the auxetic structure.

11. Filter device according to one of the preceding claims, **characterized in that** a part of a frame (58, 68) of the surface filter (55, 65) or a holder for the surface filter (55, 65) consists of a shape memory alloy or has an has an actuator device (60, 70) which consists of a shape-memory alloy, a change in shape of the shape-memory alloy being temperature-dependent and a triggering temperature for the change in shape being between 40°C and 80°C.

12. Filter device according to one of the preceding claims, **characterized in that** the at least one surface filter (55, 65) or the actuator device (60, 70) according to claim 9 or 11 is assigned a heater, in particular the heater being arranged at a distance of less than 2 cm from the surface filter (55, 65) or the actuator device (60, 70) in the filter housing (51), or the heater is part of a filter surface of the surface filter (55, 65) itself.

13. Filter device according to one of the preceding claims, **characterized in that** the filter housing (51) or the at least one surface filter (55, 65) are designed to be rotatable, preferably through 180° about a horizontal axis of rotation, in particular a rotary drive (47, 61) arranged outside the filter housing (51) is provided for the rotatability, wherein preferably the rotary drive (47, 61) is designed to operate electromotively, electromagnetically or electrothermally.

14. Domestic water-using appliance with a filter device (50) according to one of the preceding claims, the domestic appliance (11) having:
- a treatment chamber (14) for articles to be cleaned,
- water lines (19, 39) to the treatment chamber (14) and away from the treatment chamber (14),
- valves (20, 36) in the water lines (19, 39),
- a pump (30) and a heating device, which are connected together with the water lines (19, 39) and are connected to the treatment chamber (14) and are connected to the filter device (50),
- an appliance control (40).

15. Domestic appliance for conducting water according to claim 14, **characterized in that** the filter device (50) is arranged between the treatment chamber (14) and the pump (30) in the direction of flow of water, wherein preferably no functional units except filters/sieves and valves (20) are arranged between the treatment chamber (14) and the filter device (50).

16. A method for cleaning a filter device (50) according to one of claims 1 to 13, **characterized in that**
- in a filtering operation of the filter device (50), water to be filtered enters or is pumped into the filter device (50) at the dirty water inlet (21) and filtered water exits at the filter water outlet (27) and is pumped further by means of the pump (30) in the domestic appliance (11),
- the shape of the filter device (50) or at least one of the surface filters (55, 65) of the filter device (50) is changed during a backwashing operation.

17. Method according to claim 16, **characterized in that** the shape and/or the arrangement of the surface filter (55, 65) in the filter housing (51) can be changed thermally by heating and/or mechanically by deforming the surface filter (55, 65).

18. Method according to claim 16 or 17, **characterized in that**, in the backwashing operation of the at least one surface filter (55, 65), the pump (30) pumps water through water lines (32, 41) and valves (34) through the filtered water outlet ( 27) or through a separate backwashing inlet (43, 45) at the filter housing (51) into the filter housing (51) and pumps it in the opposite direction to the flow direction of the water through the at least one surface filter (55, 65), in particular through all surface filters (55, 65), wherein preferably impurities are either collected in the filtrate chamber (57, 67) or are flushed out of the filter housing (51) to the filtrate outlet (43, 45).

19. Method according to one of claims 16 to 18, **characterized in that** in the backwashing operation the change in the shape and/or the arrangement of the surface filter (55, 65) in the filter housing (51) is effected only after water has been pumped by the pump (30) pump (30) has been pumped in the opposite direction to the flow direction through the at least one surface filter (55, 65) or after fresh water has been passed under pressure from outside through the at least one surface filter (55, 65), preferably at least 2 seconds thereafter.

20. Method according to one of the claims 16 to 19, **characterized in that**, in the case of filter operation with the fine degree of filtration according to claim 6 or 9, more than 50% of the water pumped through the filter device (50) is pumped in the flow direction through the coarse surface filter (55) with the coarse filter grade, wherein a portion of less than 50%, in particular less than 20%, is additionally or alternatively pumped through the fine surface filter (65) in addition to the coarse surface filter (55), wherein preferably during the filtering operation, water to be filtered in total with the fine surface filter (65) is pumped several times through the filter device (50), in which case it is pumped through the fine surface filter (65) in each case in the portion of less than 20%.

## Revendications

1. Dispositif de filtration (50) pour un appareil ménager (11) utilisant de l'eau, le dispositif de filtration (50) présentant :
- un boîtier de filtre (51) traversé par le courant avec une entrée d'eau sale (21), une sortie d'eau de filtration (27) et une sortie de filtrat (43, 45),
- au moins un filtre de surface (55, 65) et un support pour le filtre de surface (55, 65) dans le boîtier de filtre (51), le filtre de surface (55, 65) présentant une largeur de maille et un angle par rapport à l'horizontale,
- une chambre de filtrat (57, 67) dans le boîtier de filtre (51) pour recueillir le filtrat qui a été retenu par le filtre de surface (55, 65),
le filtre de surface (55, 65), l'entrée d'eau sale (21) et la sortie d'eau de filtration (27) étant disposés les uns par rapport aux autres de telle sorte qu'une direction d'écoulement pour l'eau s'étend de l'entrée d'eau sale (21) à la sortie d'eau de filtration (27) à travers le filtre de surface (55, 65),
la chambre de filtrat (57, 67) étant accessible au moyen de la sortie de filtrat (43, 45) pour retirer le filtrat de la chambre de filtrat (57, 67),
**caractérisé en ce que**
- le au moins un filtre de surface (55, 65) est de forme variable pour modifier sa largeur de maille.

2. Dispositif de filtration selon la revendication 1, **caractérisé en ce que** la sortie de filtrat (43, 45) va directement à la chambre de filtrat (57, 67), de préférence la sortie de filtrat (43, 45) pouvant être fermée et ouverte au moyen d'une fermeture de chambre sur le boîtier de filtre (51).

3. Dispositif de filtration selon la revendication 1 ou 2, **caractérisé en ce que** le au moins un filtre de surface (55, 65) présente une forme plane, tous les filtre de surface (55, 65) présentant de préférence une forme plane, le au moins un filtre de surface (55, 65) étant notamment plan.

4. Dispositif de filtration selon l'une des revendications précédentes, **caractérisé en ce que** le dispositif de filtration (50) comporte au moins 2 filtres de surface (55, 65), notamment avec des degrés de filtration différents pour la filtration, de préférence les deux filtres de surface (55, 65) étant disposés l'un derrière l'autre dans le sens de circulation de l'eau dans le boîtier de filtre (51).

5. Dispositif de filtration selon la revendication 4, **caractérisé en ce que** les deux filtres de surface (55, 65) sont disposés l'un au-dessus de l'autre et dans des plans éventuellement parallèles l'un à l'autre, un premier filtre de surface (55) étant notamment disposé au-dessus d'un deuxième filtre de surface (65), l'entrée d'eau sale (21) étant disposée en amont ou au-dessus du premier filtre de surface supérieur (55) dans le sens d'écoulement et la sortie d'eau de filtration (27) étant disposée en aval ou en dessous du deuxième filtre de surface inférieur (65) dans le sens d'écoulement.

6. Dispositif de filtration selon la revendication 4 ou 5, **caractérisé en ce qu'**un filtre à surface grossier (55) est formé pour un degré de filtration grossier et un filtre à surface fin (65) est formé pour un degré de filtration fin, de préférence le premier filtre à surface supérieur (55) formant le filtre grossier, en particulier pour les particules grossières de plus de 2 mm de diamètre, et le deuxième filtre à surface inférieur (65) formant le filtre fin, en particulier pour les impuretés ou les particules de plus de 1 µm ou de plus de 50 µm de diamètre.

7. Dispositif de filtration selon l'une quelconque des revendications précédentes, **caractérisé en ce que** ledit au moins un filtre de surface (55, 65) est incliné selon un angle compris entre 0° et 30° par rapport à l'horizontale, un bord extérieur orienté vers le bas ou incliné vers le bas du filtre de surface (55, 65) étant dirigé vers la chambre de filtrat (57, 67), en particulier en ligne verticale directement au-dessus de la chambre de filtrat (57, 67).

8. Dispositif de filtration selon la revendication 4, **caractérisé en ce qu'**un premier filtre de surface (55) est disposé en dessous de l'entrée d'eau sale (21) et est incliné avec un angle compris entre 0° et 30° par rapport à l'horizontale, la direction d'écoulement passant à travers le premier filtre de surface (55) directement vers la sortie d'eau de filtration (27), un bord extérieur inférieur du premier filtre de surface (55) se terminant au-dessus de la chambre de filtrat (57, 67), la chambre de filtrat (57, 67) est disposé un deuxième filtre de surface (65), en particulier en orientation verticale, qui est disposé entre la chambre de filtrat (57, 67) et la sortie d'eau de filtration (27) de telle sorte que l'eau filtrée traversant le deuxième filtre de surface (65) est filtrée avec son degré de filtration, le premier filtre de surface (55) étant de préférence un filtre grossier selon la revendication 6 et présentant un degré de filtration grossier et le deuxième filtre de surface (65) étant un filtre fin selon la revendication 6 et présentant un degré de filtration fin.

9. Dispositif de filtration selon l'une des revendications précédentes, **caractérisé par** un dispositif d'actionnement (60, 70) qui est disposé sur le filtre de surface (55, 65) et qui est conçu pour modifier sa forme, en particulier qui est conçu pour plier, tordre ou comprimer une ou plusieurs fois le filtre de surface (55, 65), le filtre de surface (55, 65) présentant des mailles de filtre, qui se modifient par la modification de la forme et dont la largeur des mailles se modifie de telle sorte que, lors d'un rétrolavage du filtre de surface (55, 65) dans le sens contraire au sens d'écoulement de l'eau, les impuretés qui s'y sont fixées peuvent être détachées, le dispositif d'actionnement (60, 70) étant de préférence réalisé de manière bimétallique, sous forme d'alliage à mémoire de forme, à forme variable par modification d'une valeur de pH de son environnement, fonctionnant par électromoteur, électromagnétique ou électrothermique.

10. Dispositif de filtration selon l'une des revendications précédentes, **caractérisé en ce que** le filtre de surface (55, 65) présente une structure auxétique, les mailles du filtre selon la revendication 9 étant notamment modifiables en taille ou en largeur de maille par la structure auxétique.

11. Dispositif de filtration selon l'une des revendications précédentes, **caractérisé en ce qu'**une partie d'un cadre (58, 68) du filtre de surface (55, 65) ou un support pour le filtre de surface (55, 65) est constitué d'un alliage à mémoire de forme ou comporte un dispositif d'actionnement (60, 70) qui est constitué d'un alliage à mémoire de forme, une modification de forme de l'alliage à mémoire de forme dépendant de la température et une température de déclenchement pour la modification de forme étant comprise entre 40°C et 80°C.

12. Dispositif de filtration selon l'une des revendications précédentes, **caractérisé en ce qu'**un chauffage est associé à l'au moins un filtre de surface (55, 65) ou au dispositif d'actionnement (60, 70) selon la revendication 9 ou 11, le chauffage étant notamment disposé à une distance inférieure à 2 cm du filtre de surface (55, 65) ou du dispositif d'actionnement (60, 70) dans le boîtier de filtre (51) ou le chauffage faisant partie d'une surface filtrante du filtre de surface (55, 65) lui-même.

13. Dispositif de filtration selon l'une des revendications précédentes, **caractérisé en ce que** le boîtier de filtre (51) ou l'au moins un filtre de surface (55, 65) sont réalisés de manière à pouvoir tourner, de préférence de 180° autour d'un axe de rotation horizontal, un entraînement en rotation (47, 61) disposé à l'extérieur du boîtier de filtre (51) étant notamment prévu pour la possibilité de rotation, l'entraînement en rotation (47, 61) étant de préférence réalisé de manière à fonctionner par moteur électrique, électromagnétique ou électrothermique.

14. Appareil ménager à circulation d'eau avec un dispositif de filtration (50) selon l'une des revendications précédentes, l'appareil ménager (11) présentant :
- une chambre de traitement (14) pour les objets à nettoyer,
- des conduites d'eau (19, 39) menant à la chambre de traitement (14) et s'éloignant de la chambre de traitement (14),
- des vannes (20, 36) dans les conduites d'eau (19, 39),
- une pompe (30) et un dispositif de chauffage qui sont reliés aux conduites d'eau (19, 39) et à la chambre de traitement (14) et qui sont reliés au dispositif de filtration (50),
- une commande d'appareil (40).

15. Appareil ménager à circulation d'eau selon la revendication 14, **caractérisé en ce que** le dispositif de filtration (50) est disposé entre la chambre de traitement (14) et la pompe (30) dans le sens de circulation de l'eau, aucune unité fonctionnelle autre que des filtres/tamis et des vannes (20) n'étant de préférence disposée entre la chambre de traitement (14) et le dispositif de filtration (50).

16. Procédé de nettoyage d'un dispositif de filtration (50) selon l'une des revendications 1 à 13, **caractérisé en ce que** :
- lors d'un fonctionnement de filtrage du dispositif de filtration (50), l'eau à filtrer entre ou est pompée vers l'entrée d'eau sale (21) dans le dispositif de filtration (50) et l'eau filtrée sort vers la sortie d'eau de filtration (27) et est pompée plus loin au moyen de la pompe (30) dans l'appareil ménager (11),
- lors d'une opération de rétrolavage du dispositif de filtration (50) ou d'au moins un des filtres de surface (55, 65) du dispositif de filtration (50), la forme est modifiée.

17. Procédé selon la revendication 16, **caractérisé en ce que** la forme et/ou la disposition du filtre de surface (55, 65) dans le boîtier de filtre (51) peut être modifiée thermiquement par chauffage et/ou mécaniquement par déformation du filtre de surface (55, 65).

18. Procédé selon la revendication 16 ou 17, **caractérisé en ce que**, lors du fonctionnement par rétrolavage de l'au moins un filtre de surface (55, 65), la pompe (30) envoie de l'eau par des conduites d'eau (32, 41) et des vannes (34) à travers la sortie d'eau de filtration (27) ou à travers une entrée de rétrolavage séparée (43, 45) au niveau du boîtier de filtre (51), dans le boîtier de filtre (51) et en sens inverse du sens d'écoulement de l'eau, à travers l'au moins un filtre de surface (55, 65), en particulier à travers tous les filtres de surface (55, 65), les impuretés étant de préférence soit collectées dans la chambre de filtrat (57, 67), soit évacuées par rinçage hors du boîtier de filtre (51) vers la sortie de filtrat (43, 45).

19. Procédé selon l'une des revendications 16 à 18, **caractérisé en ce que**, en mode de lavage à contre-courant, la modification de la forme et/ou de la disposition du filtre de surface (55, 65) dans le boîtier de filtre (51) n'a lieu qu'après que de l'eau a été pompée par la pompe (30) à travers l'au moins un filtre de surface (55, 65) en sens inverse du sens d'écoulement ou après que de l'eau fraîche a été amenée de l'extérieur sous pression à travers l'au moins un filtre de surface (55, 65), de préférence au moins 2 secondes après.

20. Procédé selon l'une quelconque des revendications 16 à 19, **caractérisé en ce que**, lors du fonctionnement du filtre avec le degré de filtration fin selon la revendication 6 ou 9, plus de 50% de l'eau pompée à travers le dispositif de filtration (50) est pompée dans le sens de l'écoulement à travers le filtre de surface grossier (55) avec le degré de filtration grossier, une proportion de moins de 50%, en particulier de moins de 20%, est pompée en plus ou en alternative au filtre de surface grossière (55) à travers le filtre de surface fine (65), l'eau qui doit être filtrée globalement avec le filtre de surface fine (65) étant de préférence pompée plusieurs fois à travers le dispositif de filtration (50) lors de l'opération de filtration, en étant à chaque fois pompée à travers le filtre de surface fine (65) dans la proportion de moins de 20%.
